# EUROPEAN PATENT APPLICATION

(11) **EP 4 664 213 A1**
(43) Date of publication of application: **17.12.2025**
(21) Application number: 23928805.3
(22) Date of filing: 25.12.2023
(51) Int. Cl.: G05B 19/05

(54) **COOPERATION SYSTEM, COOPERATION METHOD, COOPERATION PROGRAM, AND COOPERATION ASSISTANCE PROGRAM**

(30) Priority: 17.03.2023 JP 2023043115
(71) Applicant: Nikkiso Co., Ltd., Tokyo 150-6022 (JP)
(72) Inventor: MORIMOTO, Takashi, Higashimurayama-shi, Tokyo 189-8520 (JP)
(74) Representative: Mathys & Squire
(86) International application number: PCT/JP2023/046302
(87) International publication number: WO 2024/195239

(57) **Abstract**

An interoperation system (1) includes a controlled device (4), a PLC (3) controlling a first operation of the device, and an information processing apparatus (6) operating in conjunction with the PLC. The PLC includes a PLC control unit (33), and a PLC storage (32) storing multiple first device values for the first operation, and multiple second device values for a second operation of the apparatus. The first device values include one or more first instruction values for causing the first operation to be executed, and the second device values include one or more second instruction values for causing the second operation to be executed. The apparatus includes a device value acquisition unit (631) acquiring the second device values, a determination unit (632) determining whether any of the second instruction values have been changed, and an operation control unit (633) controlling the second operation corresponding to the changed second instruction value.

## Description

### [Technical Field]

The present invention relates to an interoperation system, an interoperation method, an interoperation program, and an interoperation auxiliary program.

### [Background Art]

In the field of Factory Automation (FA), a Programmable Logic Controller (PLC) is a controller that controls operations of controlled devices such as conveyance device and testing device included in industrial manufacturing apparatuses (i.e., the operation of the manufacturing apparatus). The PLC controls the operation of various controlled devices by executing a control program (for example, a ladder program) created by a user, based on input signals from input device (for example, sensors) connected to the PLC.

However, for example, a complex function such as image processing cannot be achieved by the PLC alone. In this case, in the PLC, a dedicated unit (dedicated controller) is selected and expanded on a unit-by-unit basis according to the function required by the user (for example, see PTL 1). In a technique disclosed in PTL 1, the PLC achieves an image processing function by controlling the operation of the dedicated unit based on the ON/OFF state of a trigger. In this way, when a plurality of functions that cannot be achieved only by the PLC in an operation process of the manufacturing apparatus is required, a dedicated unit is required for each function.

### [Citation List]

### [Patent Literature]

[PTL 1] JP2021-189481 A

### [Summary of Invention]

### [Technical Problem]

Specifications of the PLC differ by manufacturer, and thus the manufacturer of the PLC used in a manufacturing apparatus may be designated by certain users of the manufacturing apparatus. However, a function supported by a dedicated unit differ by manufacturer, and thus, when no dedicated unit is available that is compatible with multiple manufacturers, it is difficult to achieve a function that meets a demand from the user. Further, when a plurality of functions is packaged in the dedicated unit, an expensive dedicated unit is needed in order to achieve a part of the functions. In this way, in manufacturing apparatuses in which the operations of controlled devices are controlled by the PLC, the selectable functions are limited, and the degree of freedom in function selection is low.

The present invention is directed to enhancing the degree of freedom in selecting functions that are implementable in a manufacturing apparatus in which the operation is controlled by a PLC.

### [Solution to Problem]

An interoperation system according to one aspect of the present invention is an interoperation system including: a controlled device included in a manufacturing apparatus; a PLC configured to control a first operation of the controlled device; and an information processing apparatus that is connected to the PLC via a communication network line and is configured to operate in conjunction with the PLC, in which the PLC includes a PLC control unit configured to control the first operation, and a PLC storage configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, and the information processing apparatus includes a device value acquisition unit configured to acquire one or more of the second device values stored in the PLC storage at a predetermined time interval, a determination unit configured to determine, after the acquisition of the one or more second device values, whether any of the second instruction values included in the acquired second device values have been changed, and an operation control unit configured to control, when any of the second instruction values have been changed, the second operation corresponding to the changed second instruction value among the second operations.

An interoperation method according to one aspect of the present invention is an interoperation method executed by an interoperation system including a controlled device included in a manufacturing apparatus, a PLC configured to control a first operation of the controlled device, and an information processing apparatus that is connected to the PLC via a communication network line and is configured to operate in conjunction with the PLC, in which the PLC includes a PLC control unit configured to control the first operation, and a PLC storage configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, the interoperation method including: a device value acquisition step of acquiring one or more of the second device values including the second instruction values stored in the PLC storage at a predetermined time interval; an instruction value determination step of determining, after the acquisition of the one or more second device values, whether any of the second instruction values included in the acquired second device values have been changed; and an operation control step of controlling, when any of the second instruction values have been changed, the second operation corresponding to the changed second instruction value among the second operations.

An interoperation program according to one aspect of the present invention is an interoperation program executed by an information processing apparatus that is connected to, via a communication network line, a PLC configured to control a first operation of a controlled device included in a manufacturing apparatus and is configured to operate in conjunction with the PLC, in which the PLC includes a PLC storage configured to store a plurality of first device values to be used for controlling the first operation, and a plurality of second device values to be used for controlling a second operation of the information processing apparatus, in which the plurality of second device values includes one or more second instruction values for causing the second operation to be executed, and the information processing apparatus includes a processor, the interoperation program causing the processor to execute: acquisition processing of acquiring one or more of the second device values stored in the PLC storage at a predetermined time interval; instruction value determination processing of determining, after the acquisition of the one or more second device values, whether any of the second instruction values included in the acquired second device values have been changed; and operation control processing of controlling, when any of the second instruction values have been changed, the second operation corresponding to the changed second instruction value among the second operations.

An interoperation auxiliary program according to one aspect of the present invention is an auxiliary program executed by a PLC that is configured to control a first operation of a controlled device included in a manufacturing apparatus and is also connected to an information processing apparatus via a communication network line and is configured to operate in conjunction with the information processing apparatus, in which the PLC includes a PLC control unit configured to control the first operation, and a PLC storage configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, the interoperation auxiliary program causing the PLC control unit to execute: second instruction value change processing of changing the second instruction value corresponding to the second operation in order to cause the information processing apparatus to execute the second operation; and first instruction value change processing of changing, based on an instruction from the information processing apparatus that has executed the second operation, the first instruction value corresponding to the instruction.

### [Advantageous Effects of Invention]

The present invention enhances the degree of freedom in selecting functions that are implementable in the manufacturing apparatus in which the operation is controlled by the PLC.

### [Brief Description of Drawings]

[Fig. 1] Fig. 1 is a functional block diagram illustrating an embodiment of an interoperation system according to the present invention.
[Fig. 2] Fig. 2 is a functional block diagram of a PLC included in the interoperation system in Fig. 1.
[Fig. 3] Fig. 3 is a schematic diagram illustrating one example of an overview of a PLC storage included in the PLC in Fig. 2.
[Fig. 4] Fig. 4 is a schematic diagram illustrating one specific example of information stored in the PLC storage in Fig. 3.
[Fig. 5] Fig. 5 is a functional block diagram of a touch panel terminal included in the interoperation system in Fig. 1.
[Fig. 6] Fig. 6 is a schematic diagram illustrating one example of information stored in a TP storage included in the touch panel terminal in Fig. 5.
[Fig. 7] Fig. 7 is a schematic diagram illustrating one example of information displayed on a TP display operation unit included in the touch panel terminal in Fig. 5.
[Fig. 8] Fig. 8 is a functional block diagram illustrating an embodiment of an information processing apparatus included in the interoperation system in Fig. 1.
[Fig. 9] Fig. 9 is a schematic diagram illustrating one example of information stored in a PC storage included in the information processing apparatus in Fig. 8.
[Fig. 10] Fig. 10 is a schematic diagram illustrating one example of another information stored in the PC storage in Fig. 9.
[Fig. 11] Fig. 11 is a schematic diagram illustrating an overview of relationships among components in the interoperation system in Fig. 1.
[Fig. 12] Fig. 12 is a flowchart illustrating one example of operations of the information processing apparatus in Fig. 8.
[Fig. 13] Fig. 13 is a sequence diagram illustrating one example of operations among the components in the interoperation system in Fig. 1.

### [Description of Embodiments]

Embodiments of an interoperation system according to the present invention (hereinafter referred to as "present system"), an interoperation method according to the present invention (hereinafter referred to as "present method"), an interoperation program according to the present invention (hereinafter referred to as "present interoperation program"), and an interoperation auxiliary program according to the present invention (hereinafter referred to as "present auxiliary program") will be described below. In the following description, each of the drawings is appropriately referred. In the drawings, the same members and components are indicated with the same reference signs, and repetitive description thereof will be omitted.

In a manufacturing apparatus including a controlled device in which operations are controlled by a programmable logic controller (PLC), the present invention enables the PLC and a personal computer (PC) to operate in conjunction, thereby implementing, via the PC, functions that cannot be implemented by the PLC and the controlled device alone. Further, the present invention consolidates user interface (UI) functions into a touch panel terminal included in the manufacturing apparatus and connects the PLC to the touch panel terminal, thereby enabling the execution of PC operations and the modification of PC parameter values via the PLC through operations of the touch panel terminal. The PC is one example of the information processing apparatus.

### Interoperation System

### Configuration of Interoperation System

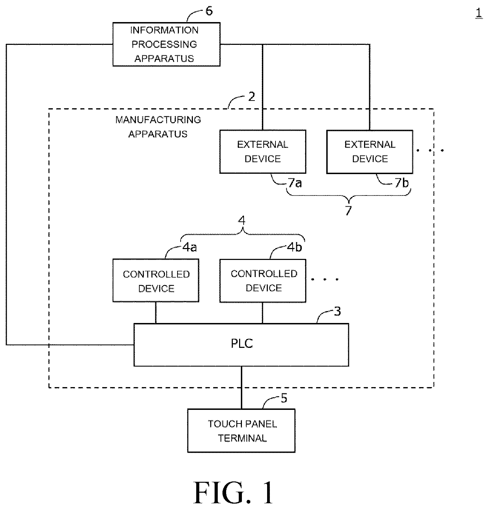

Fig. 1 is a functional block diagram illustrating the embodiment of the present system.

The present system 1 enables a PLC 3 included in a manufacturing apparatus 2 and an information processing apparatus 6 to operate in conjunction, thereby implementing, via the information processing apparatus 6, various functions required in the manufacturing apparatus 2. Further, the present system 1 consolidates UI functions into a touch panel terminal 5 included in the manufacturing apparatus 2 and connects the PLC 3 to the touch panel terminal 5, thereby enabling the execution of operations of the information processing apparatus 6 and the modification of parameter values used in the operations of the information processing apparatus 6, via the PLC 3 in response to operations performed on the touch panel terminal 5. The present system 1 includes the manufacturing apparatus 2, the information processing apparatus 6, and a plurality of external devices 7 (e.g., 7a, 7b, and the like). In the following description, when each of the external devices 7a, 7b, and the like is not particularly distinguished, the external devices 7a, 7b, and the like are collectively referred to as the external device 7.

The manufacturing apparatus 2 is, for example, an industrial manufacturing apparatus used for manufacturing articles in the field of factory automation (FA). The manufacturing apparatus 2 includes the PLC 3, a plurality of controlled devices 4 (4a, 4b, and the like), and the touch panel terminal 5. In the following description, when each of the controlled devices 4a, 4b, and the like is not particularly distinguished, the controlled devices 4a, 4b, and like are collectively referred to as the controlled device 4.

### Configuration of PLC

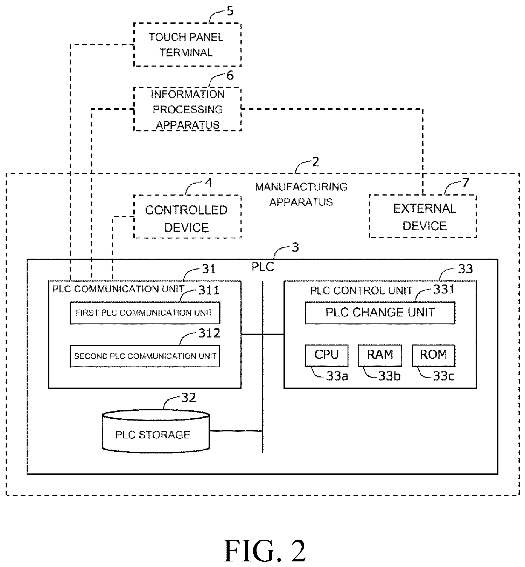

Fig. 2 is a functional block diagram of the PLC 3. The figure also illustrates the manufacturing apparatus 2, the controlled device 4, the touch panel terminal 5, the information processing apparatus 6, and the external device 7 by dashed lines for convenience of description.

The PLC 3 controls operations of the controlled device 4 and the information processing apparatus 6, based on a control program (for example, a ladder program). The PLC 3 is, for example, a known PLC. The PLC 3 includes a PLC communication unit 31, a PLC storage 32, and a PLC control unit 33.

Note that, in the present invention, the control program executed in the PLC 3 may be a control program executed in a general PLC and is not limited to the ladder program.

The PLC communication unit 31 communicates with an input device (not illustrated; the same applies hereinafter), the controlled device 4, the touch panel terminal 5, and the information processing apparatus 6 via, for example, a communication network line (for example, a local aria network (LAN) cable, or a signal line). The "input device" is a device (for example, a sensor such as an infrared sensor, a pressure sensor, a photoelectric sensor, and a temperature sensor that detect an operation of the controlled device 4) that is mounted on the manufacturing apparatus 2, is connected to the PLC communication unit 31, and inputs a signal to the PLC 3. The PLC communication unit 31 includes a first PLC communication unit 311 connected to both the touch panel terminal 5 and the information processing apparatus 6, and a second PLC communication unit 312 connected to both the input device and the controlled device 4. The first PLC communication unit 311 is, for example, a known communication interface including a LAN connector and the like. The second PLC communication unit 312 is, for example, a known I/O terminal.

The PLC storage 32 stores information (for example, a control program, various device values, and the like) required for the operation of the PLC 3. The PLC storage 32 is, for example, an information storage medium such as flash memory.

Note that, in the present invention, the control program may be stored in a read only memory (ROM) 33c described later.

The "device value" is information related to the operations of devices (for example, the input device and the controlled device 4) and apparatuses (for example, the information processing apparatus 6) that are connected to the PLC 3. The device values include a plurality of first device values and a plurality of second device values.

The "first device value" is information used for controlling the operation of the controlled device 4. The first device values include a plurality of first parameter values and a plurality of first instruction values. Each first device value is stored (written), for example, in each address within a first device region "D1" described later. An operation of the controlled device 4 is one example of the first operation in the present invention.

The "first parameter value" is, for example, information indicating the value of a parameter used for controlling the operation of the controlled device 4, such as the current/voltage supplied to the controlled device 4, the rotation speed of an actuator, the movement distance of a conveyed object (i.e., workpiece), and the amount of light from a light source.

The "first instruction value" is information indicating a value (e.g., "1"/"0" corresponding to the ON/OFF state of an execution flag, or "0" to "n", where n is an integer equal to or greater than one, corresponding to a branch flag) that functions as a so-called flag (e.g., the execution flag, the branch flag, or a completion flag) for the operation of the controlled device 4. That is, the first instruction value includes information indicating a value that causes the controlled device 4 to execute an operation, such as the ON/OFF state of the execution flag or a value corresponding to an operation to be executed after a branch. The operation of the controlled device 4 also includes an operation of stopping the controlled device 4 during operation. Herein, when an "operation to be executed" is an operation for lighting, for example, "1" is a value corresponding to a maximum light amount, "2" is a value corresponding to an intermediate light amount, "3" is a value corresponding to a minimum light amount, and "0" is a value corresponding to a light amount "0 (OFF)". In this way, in the present embodiment, the controlled device 4 is capable of executing a plurality of different operations, and each first instruction value corresponds to each operation of the non-controlled device 4.

The "second device value" is information used for controlling the operation of the information processing apparatus 6. The second device values include a plurality of second parameter values and a plurality of second instruction values. Each second device value is stored (written), for example, in each address within a second device region "D2" described later.

The "second parameter value" is information indicating the value of a parameter (e.g., a parameter of image processing, a parameter of determination processing, or the like) used for controlling the operation of the information processing apparatus 6 (and the external device 7), such as the operation of an operation program described later. An operation of the information processing apparatus 6 is one example of the second operation in the present invention.

The "operation of the information processing apparatus 6" includes not only operations to be executed by hardware components of the information processing apparatus 6 through execution of the operation program by the information processing apparatus 6, but also operations to be executed by the external device 7, such as causing a camera to capture an image, causing a microphone to collect an external sound, or causing a PC display unit 64 described later to display an image, through execution of the operation program by the information processing apparatus 6. That is, the operation of the information processing apparatus 6 includes not only operations to be executed in the information processing apparatus 6, but also operations that the information processing apparatus 6 causes the external device 7 to execute as part of the operation of the information processing apparatus 6. In other words, the second operation in the present invention may also include an operation of the external device 7. Herein, the former example is, for example, an operation in which the information processing apparatus 6 executes information processing, such as image processing, to acquire certain information from other information through computation. The latter example is, for example, an operation in which certain information is acquired by controlling the operation of the external device 7, such as an operation of acquiring a captured image using an imaging device. Accordingly, the second parameter value may include information indicating the value of a parameter used for controlling the operation of the external device 7, such as the angle of view of a camera or a parameter related to image capturing, such as resolution. In this way, in the present invention, information used for controlling the operations of the information processing apparatus 6 and the external device 7 may serve as the second parameter value. The operations of the information processing apparatus 6 and the external device 7 also include an operation of stopping the information processing apparatus 6 and the external device 7 during operation.

The "second instruction value" is information indicating a value (e.g., "1"/"0" corresponding to the ON/OFF state of an execution flag, or "0" to "n", where n is an integer equal to or greater than one, corresponding to a branch flag) that functions as a so-called flag (e.g., the execution flag, the branch flag, or a completion flag) for the information processing apparatus 6. That is, the second instruction value includes information indicating a value that causes the information processing apparatus 6 to execute an operation, such as the ON/OFF state of the execution flag or a value corresponding to an operation to be executed after a branch, that is, information indicating a value that causes the information processing apparatus 6 to execute an operation program. Herein, when an "operation to be executed" is an operation corresponding to a screen display, for example, "1" is a value corresponding to the display of a raw image, "2" is a value corresponding to the display of a setting screen, and "3" is a value corresponding to the display of an automatic driving screen. In this way, in the present embodiment, the information processing apparatus 6 is capable of executing a plurality of different operations, and the second instruction value corresponds to each operation (operation program described later) of the information processing apparatus 6.

Note that, in the present invention, the device values are not limited to the first device value and the second device value. That is, for example, the device values may include information indicating a state (e.g., presence or absence of an operation, presence or absence of an abnormality, or the like) of each of the input device, the controlled device 4, and the information processing apparatus 6, a value (e.g., a measurement value, a coordinate of a current position, or the like) input from each of the input device and the controlled device 4, and a first device value group and a second device value group corresponding to each operation condition (e.g., a workpiece size, or the like) of the information processing apparatus 6. The "first device value group" is, for example, a set of first parameter values corresponding to each of a plurality of workpiece sizes. The "second device value group" is, for example, a set of second parameter values corresponding to each of a plurality of workpiece sizes.

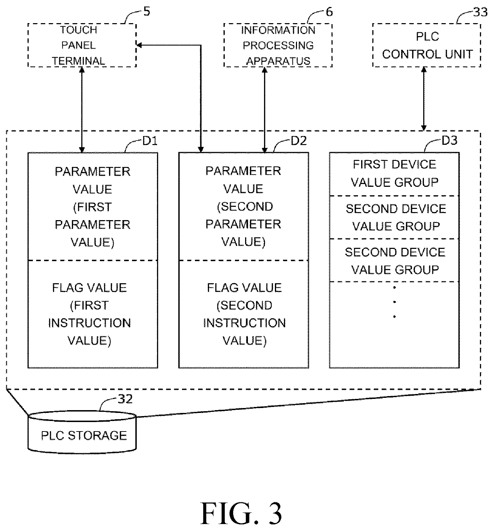

Fig. 3 is a schematic diagram illustrating one example of an overview of information stored in the PLC storage 32. The figure also illustrates the other components involved in the information stored in the PLC storage 32 by dashed lines for convenience of description.

In the figure, the largest frame indicated by a dashed line indicates a region in a memory constituting the PLC storage 32. "D1" indicates a region in which the first device value is stored (i.e., first device value region), "D2" indicates a region in which the second device value is stored (i.e., second device region), and "D3" indicates a region in which another value (e.g., the second device value group) is stored (i.e., third device region). As described later, the PLC control unit 33 changes a device value stored in the PLC storage 32, based on the control program. The touch panel terminal 5 acquires a parameter value of each of the first device value region and the second device value region, and provides an instruction for a change of the parameter values as necessary. The information processing apparatus 6 acquires a device value of the second device value region, and provides an instruction for a change of a flag value (i.e., the first instruction value and the second instruction value) as necessary.

Note that, in the present invention, the information stored in the PLC storage 32 may be stored in such a way as to enable execution of the present method described later, and need not be clearly divided and stored as a large region as illustrated in Fig. 3.

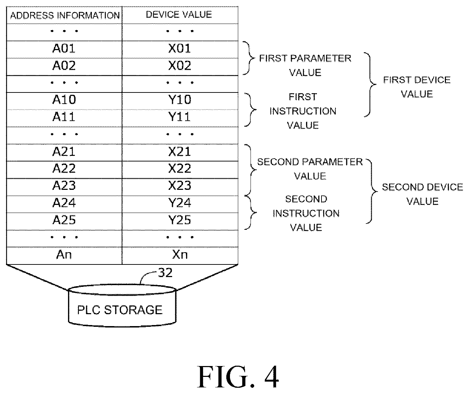

Fig. 4 is a schematic diagram illustrating one specific example of the information stored in the PLC storage 32. "Address information" is position information unique to an address assigned to each address in the PLC storage 32. The figure illustrates that the address information and a device value are stored in association with each other in the PLC storage 32. The figure illustrates that the address information and a device value are stored in association with each other in the PLC storage 32. The PLC control unit 33 (see Fig. 2) refers to the PLC storage 32, for example, by using address information, and is thereby capable of retrieving a device value stored in the PLC storage 32 in association with the address information.

The figure illustrates, for example, that a device value corresponding to address information "A01" (i.e., first parameter value) is "X01", a device value corresponding to address information "A10" (i.e., first instruction value) is "Y10", a device value corresponding to address information "A21" (i.e., second parameter value) is "X21", and a device value corresponding to address information "A24" (i.e., second instruction value) is "Y24".

The figure mainly referred to in the present description returns to Fig. 2. In this way, in the present invention, the PLC storage 32 also stores the second device value used for controlling an operation of the information processing apparatus 6 (and the external devices 7) in addition to the first device value stored also in a conventional PLC. As a result, as described later, the PLC 3 is capable of causing the information processing apparatus 6 (and the external devices 7) to execute an operation (i.e., to control the operation) and of obtaining the result, simply by changing the second instruction value. Further, the PLC control 33 is capable of dynamically changing parameters of the information processing apparatus 6 and the external devices 7 by changing part or all of the second device value, based on the control program.

The PLC control unit 33 controls the operation of the entire PLC 3, and also controls the operations of the controlled device 4 and the information processing apparatus 6 (and the external devices 7), based on the control program. The PLC control unit 33 is configured, for example, by a central processing unit (CPU) 33a, a random access memory (RAM) 33b that functions as a work region of the CPU 33a, the ROM 33c that stores various types of information and programs, and the like. The PLC control unit 33 includes a PLC change unit 331.

In the PLC control unit 33, the control program operates and cooperates with hardware resources of the PLC 3, and contributes to the implementation of each operation including the present method described later. That is, for example, the processor (the CPU 33a) included in the PLC control unit 33 executes the control program, and thus the control program causes the processor to function as the PLC change unit 331 and to assist the controlled device 4 and the information processing apparatus 6 in operating in conjunction with each other (i.e., interoperating), thereby allowing the processor to execute a part of the present method. That is, the present auxiliary program is incorporated into the control program, and the control program also functions as the present auxiliary program.

The PLC change unit 331 changes the first device value or the second device value, based on information from the outside (e.g., an instruction from the touch panel terminal 5 and the information processing apparatus 6, a result of an operation of the controlled device 4, a result of an operation of the information processing apparatus 6, or the like), and an operation of the control program. A specific operation of the PLC change unit 331 will be described later.

### Configuration of Controlled Device

The controlled device 4 is a device (e.g., a servo motor, a light source, an electromagnetic valve, or the like) mounted on the manufacturing apparatus 2 and the operation of the controlled device 4 is controlled by the PLC 3 (PLC control unit 33). The operation of the controlled device 4 is controlled by the PLC control unit 33, based on the first parameter value and the first instruction value.

### Configuration of Touch Panel Terminal

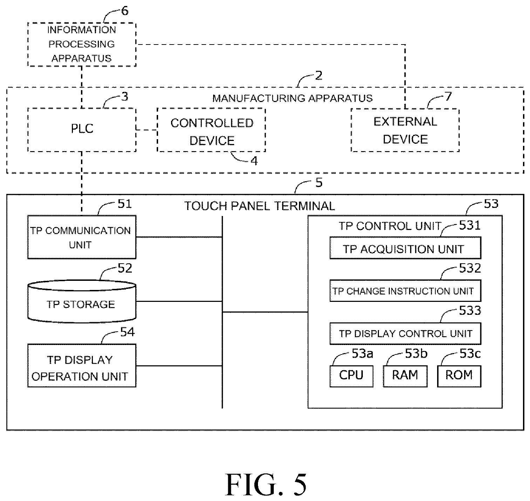

Fig. 5 is a functional block diagram of the touch panel terminal 5. The figure also illustrates the manufacturing apparatus 2, the PLC 3, the touch panel terminal 5, the information processing apparatus 6, and the external device 7 by dashed lines for convenience of description.

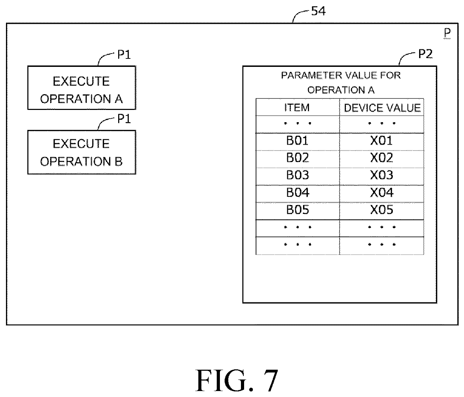

The touch panel terminal 5 displays an operation screen P (see Fig. 7; the same applies hereinafter) for the PLC 3, the controlled device 4, and the information processing apparatus 6, and also accepts user operations for the present system 1. The touch panel terminal 5 is a touch panel PC having, for example, a display function, an operation (input) function, and an information processing function. The touch panel terminal 5 includes a TP communication unit 51, a TP storage 52, a TP control unit 53, and a TP display operation unit 54.

The TP communication unit 51 communicates with the information processing apparatus 6, for example, via a communication network line (e.g., a LAN cable). The TP communication unit 51 is, for example. a communication interface including a LAN connector and the like.

The TP storage 52 stores information (e.g., the device values acquired from the PLC storage 32, and the like) required for the operation of the touch panel terminal 5. The TP storage 52 is, for example, an information storage medium such as a hard disk drive (HDD), a solid state drive (SSD), RAM, or flash memory.

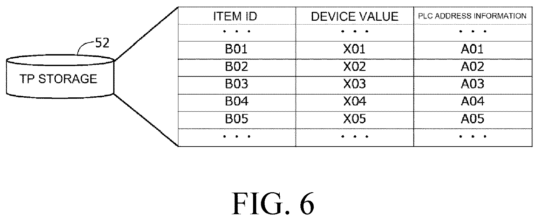

Fig. 6 is a schematic diagram illustrating one example of information stored in the TP storage 52. The "item ID" is identification information unique to an item assigned for each parameter corresponding to each device value. The "PLC address information" is position information unique to an address in which each device value is stored in the PLC storage 32. The figure illustrates that the item ID, the PLC address information, and the device value are stored in the TP storage 52 in association with one another. The TP control unit 53 (see Fig. 4) refers to the TP storage 52, for example, by using the item ID, and is thereby capable of retrieving a device value and PLC address information that are stored in the TP storage 52 in association with the item ID.

The figure illustrates that, for example, PLC address information corresponding to an item ID "B01" is "A01", and a device value (i.e., first parameter value) is "X01".

The figure mainly referred to in the present description returns to Fig. 5. The TP control unit 53 controls the operation of the entire touch panel terminal 5. The TP control unit 53 is configured, for example, by a CPU 53a, a RAM 53b that functions as a work region of the CPU 53a, a ROM 53c that stores various types of information and programs, and the like. The TP control unit 53 includes a TP acquisition unit 531, a TP change instruction unit 532, and a TP display control unit 533.

The TP acquisition unit 531 acquires one or more of the device values (i.e., the first parameter value and the second parameter value) stored in the PLC storage 32. A specific operation of the TP acquisition unit 531 will be described later.

The TP change instruction unit 532 provides an instruction for a change of one or more of the device values stored in the PLC storage 32 and the TP storage 52, based on a user operation on one or more of the device values displayed on the TP display operation unit 54. A specific operation of the TP change instruction unit 532 will be described later.

The TP display control unit 533 displays the operation screen P on the TP display operation unit 54 in accordance with a preset display mode. A specific operation of the TP display control unit 533 will be described later.

The TP display operation unit 54 displays the operation screen P to the user, and also accepts user operations. The TP display operation unit 54 is, for example, a known touch panel. The TP display operation unit 54 is one example of the TP display unit in the present invention.

Fig. 7 is a schematic diagram illustrating one example of information displayed on the TP display operation unit 54. The figure illustrates that two execution operation regions P1 and one change operation region P2 are displayed on the operation screen P. The figure illustrates that "execute operation A" being an icon operated in order to execute an operation A and "execute operation B" being an icon operated in order to execute an operation B are displayed as the execution operation regions P1. Further, the figure illustrates that the device values (e.g., the second parameter values) used in the operation A is displayed as the change operation region P2.

The figures mainly referred to in the present description return to Figs. 2, 5 and 7. On the operation screen P, for example, when the user operates the icon of "execute operation A", the TP change instruction unit 532 instructs the PLC 3 (PLC change unit 331) to change a corresponding first instruction value or a corresponding second instruction value, based on the operated execution operation region P1. That is, for example, the TP change instruction unit 532 generates a signal that provides the instruction to change the first instruction value or the second instruction value, and transmits the signal to the PLC 3. As a result, the operation of the controlled device 4 or the information processing apparatus 6 is executed. Further, for example, when the user performs an operation to change a second parameter value displayed in the change operation region P2, the TP change instruction unit 532 instructs the PLC 3 (the PLC change unit 331) to change the corresponding second parameter value, based on the content of the operation. That is, for example, the TP change instruction unit 532 generates a signal that provides the instruction to change the second parameter value, and transmits the signal to the PLC 3. As a result, the second parameter value stored in the PLC storage 32 is changed.

The "operation screen P" is a screen on the TP display operation unit 54 for accepting user operations. The operation screen P includes, for example, the execution operation region P1 and the change operation region P2.

The "execution operation region P1" is a region where an icon (e.g., an operation button) to be operated by the user in order to start the operations of the controlled device 4 and the information processing apparatus 6 is displayed. Each of the execution operation regions P1 is assigned one or more of the first instruction values and/or second instruction values that are changed in response to a user operation. Thus, when the execution operation region P1 is operated by a user, the TP change instruction unit 532 can instruct the PLC 3 to change the second instruction value corresponding to the operation.

The "change operation region P2" is a region where the device values (i.e., the first parameter values and the second parameter values) are displayed for a user in order to allow the user to change one or more of the device values, and the operation by the user is accepted. Each of the device values displayed in the change operation region P2 is assigned the first parameter or the second parameter to be changed in response to a user operation. Thus, when the device value displayed in the change operation region P2 is changed by the user, the TP change instruction unit 532 can instruct the PLC 3 to change the device value corresponding to the change.

Note that, in the present invention, the information displayed on the TP display operation unit 54 is not limited to one example illustrated in Fig. 7. That is, for example, the TP display operation unit 54 may display only one execution operation region P1 on one operation screen P, or may display "three" or more execution operation regions P1. In the latter case, the second device values acquired by the TP acquisition unit 531 may include a plurality of second instruction values to be changed in response to an operation of the user for each of the execution operation regions P1. Further, for example, the TP display operation unit 54 may display a plurality of tabs on one operation screen P, and may display the change operation region P2 of the controlled device 4, the information processing apparatus 6, or the external devices 7 assigned for each of the tabs.

### Configuration of Information processing apparatus

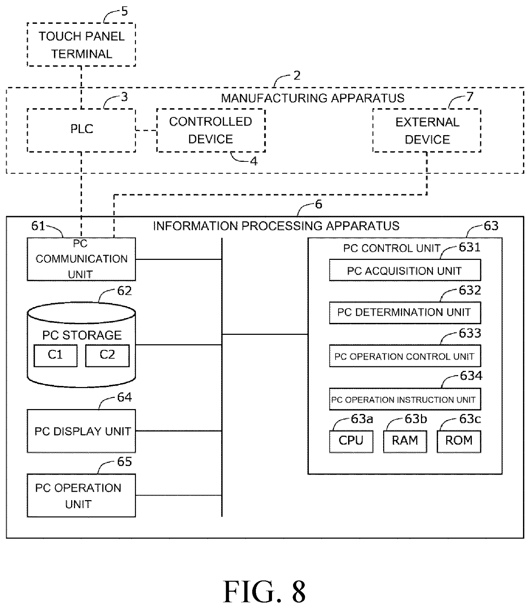

Fig. 8 is a functional block diagram illustrating the embodiment of the information processing apparatus 6. The figure also illustrates the manufacturing apparatus 2, the PLC 3, the controlled device 4, the touch panel terminal 5, and the external devices 7 by dashed lines for convenience of description.

The information processing apparatus 6 executes a predetermined operation by operating in conjunction with the PLC 3 and the external devices 7. The information processing apparatus 6 is, for example, an industrial PC capable of executing various types of information processing through the execution of general-purpose programming code. The information processing apparatus 6 includes a PC communication unit 61, a PC storage 62, a PC control unit 63, the PC display unit 64, and a PC operation unit 65.

The PC communication unit 61 communicates with the PLC 3 and the external devices 7, for example, via a communication network line (e.g., a LAN cable, a USB cable, or the like). The PC communication unit 61 is, for example, a known communication interface including a LAN connector and a USB connector. The information processing apparatus 6 is connected to the PLC 3 via a communication network line.

Note that, in the present invention, the PC communication unit 61 may communicate with another computer via another communication network line. Another communication network line is, for example, an information communication network such as the Internet, a mobile communication network, a LAN, a wide area network (WAN), Wi-Fi (registered trademark), or Bluetooth (registered trademark).

The PC storage 62 stores information required for the operation of the information processing apparatus 6 such as the second device value, the present interoperation program, various operation programs, first correspondence information C1, and second correspondence information C2. The PC storage 62 is, for example, an information storage medium such as a HDD, an SSD, RAM, or flash memory. The PC storage 62 is one example of the storage in the present invention.

The "operation program" is a program corresponding to an operation executed by the information processing apparatus 6. The operation program includes a self-operation program that controls the operation (information processing) of the information processing apparatus 6 itself such as an image processing program in which the information processing apparatus 6 executes image processing, and an external operation program that controls the operation of the external device 7 connected to the information processing apparatus 6 such as an instruction program in which the information processing apparatus 6 provides an instruction on the operation of the external device 7. The PC storage 62 stores operation programs respectively corresponding to each of a plurality of operations. The information processing apparatus 6 (the PC control unit 63) executes one operation program, thereby causing the operation corresponding to the operation program to be executed.

The "first correspondence information C1" is information indicating a correspondence between each operation of the controlled device 4 and each content of an instruction from a PC operation instruction unit 634 described later.

The "content of the instruction" is information indicating an address in which a device value being a change target in order to cause the PLC 3 to execute the operation of the controlled device 4 is stored (i.e., PLC address information), and information indicating the device value. Herein, the "information indicating the address" includes not only PLC address information in which a first instruction value corresponding to the operation of the controlled device 4 is stored, but also PLC address information in which a device value changed in order to change the first instruction value (e.g., the second device value) is stored. The "device value changed in order to change the first instruction value" is, for example, a device value that serves as a trigger for the PLC change unit 331 to change the first instruction value. That is, for example, when the second instruction value serving as a trigger has been changed, the PLC change unit 331 changes the first instruction value, based on the changed second instruction value.

Note that, in the present invention, the content of the instruction may include a second parameter value for returning an abnormal second parameter value to a normal value, and information indicating an address at which the second parameter value is stored. In this case, even when an abnormal value is included in the second parameter value, the information processing apparatus 6 is capable of determining whether the second parameter value is normal or abnormal, and is also capable of returning (writing) a normal value to the PLC 3. That is, the information processing apparatus 6 is capable of independently imposing a limitation on a parameter value specific to the information processing apparatus 6, separately from the control program of the PLC 3. In this case, a limitation of a parameter value is not needed in the PLC 3.

The "second correspondence information C2" is information indicating a correspondence between each second instruction value and each operation program.

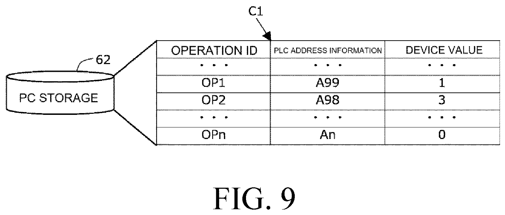

Fig. 9 is a schematic diagram illustrating one example of information (i.e., first correspondence information C1) stored in the PC storage 62. The "operation ID" is identification information unique to the first operation set for each first operation. The figure illustrates that the operation ID, PLC address information, and the device value are stored in the PC storage 62 in association with one another. The PC operation instruction unit 634, which will be described later, refers to the first correspondence information C1 by using the operation ID, for example, and thus, is capable of retrieving an address and a device value for causing an operation corresponding to an instruction to be executed from among a plurality of operations (first operations).

The figure illustrates that, for example, the PLC address information corresponding to the operation ID "OP1" is "A99", and the device value (e.g., the second instruction value) is "1".

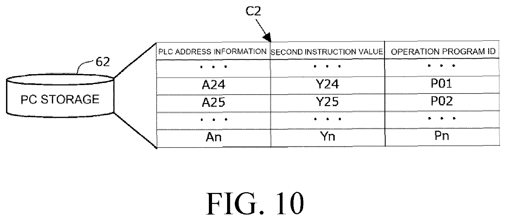

Fig. 10 is a schematic diagram illustrating one example of another information (the second correspondence information C2) stored in the PC storage 62. The "second instruction value" is a device value (e.g., a value "1" of a flag) being a trigger for executing a corresponding operation program in the information processing apparatus 6. The "operation program ID" is identification information unique to the operation program set for each operation program. The figure illustrates that PLC address information, the second instruction value, and the processing program ID are stored in the PC storage 62 in association with one another. The PC control unit 63 refers to the second correspondence information C2 by using PLC address information and a second instruction value corresponding to the PLC address information, for example, and thus, is capable of selecting and executing the operation program corresponding to the second instruction value from among a plurality of operation programs.

The figure illustrates, for example, that, when the second instruction value corresponding to the PLC address information "A24" is "Y24", the selected operation program is "P01".

The figure mainly referred to in the present description returns to Fig. 8. The PC control unit 63 controls the operation of the entire information processing apparatus 6, and also executes a part of the present method by executing the present interoperation program. The PC control unit 63 is configured by, for example, a CPU 63a, a RAM 63b that functions as a work region of the CPU 63a, a ROM 63c that stores various types of information and programs, and the like. The CPU 63a is one example of the processor in the present invention. The PC control unit 63 includes a PC acquisition unit 631, a PC determination unit 632, a PC operation control unit 633, and the PC operation instruction unit 634.

In the PC control unit 63, the present interoperation program operates and cooperates with hardware resources of the information processing apparatus 6, and implements a part of the present method described later. That is, for example, the processor (the CPU 63a) included in the PC control unit 63 executes the present interoperation program, and thus the present interoperation program causes the processor to function as the PC acquisition unit 631, the PC determination unit 632, the PC operation control unit 633, and the PC operation instruction unit 634, thereby allowing the processor to execute the part of the present method.

The PC acquisition unit 631 acquires one or more of the second device values including one or more of the second instruction values stored in the PLC storage 32 at a predetermined time interval (e.g., a fixed interval such as an interval of several tens of milliseconds). The PC acquisition unit 631 is one example of the acquisition unit in the present invention. A specific operation of the PC acquisition unit 631 will be described later.

After one or more of the second device values are acquired by the PC acquisition unit 631, the PC determination unit 632 determines whether any of the second instruction values included in the acquired second device values have been changed. The PC determination unit 632 is one example of the determination unit in the present invention. A specific operation of the PC determination unit 632 will be described later.

After one or more of the second device values are acquired by the PC acquisition unit 631, the PC operation control unit 633 controls one or more operations corresponding to one or more of the second instruction values (i.e., executes one or more operation programs), based on one or more of the second instruction values included in one or more of the second device values. The PC operation control unit 633 is one example of the operation control unit in the present invention. A specific operation of the PC operation control unit 633 will be described later.

The PC operation instruction unit 634 instructs the PLC 3 to execute the operation (the first operation) of the controlled device 4, based on a result of the operation of the information processing apparatus 6 and/or the external device 7. The PC operation instruction unit 634 is one example of the operation instruction unit in the present invention. A specific operation of the PC operation instruction unit 634 will be described later.

The PC display unit 64 displays predetermined information (e.g., a capturing image or the like) to the user, based on an operation executed by the PC operation control unit 633. The PC display unit 64 is, for example, a monitoring apparatus such as a liquid crystal display. The PC display unit 64 is disposed, for example, in a position visible to the user in the manufacturing apparatus 2.

The PC operation unit 65 accepts user operations for the information processing apparatus 6. The PC operation unit 65 is, for example, an information input device such as a keyboard, a mouse, or the like.

Note that, in the present invention, the PC display unit 64 and the PC operation unit 65 may be implemented as a touch panel.

Further, in the present invention, the first correspondence information C1 and the second correspondence information C2 may be stored in the ROM 63c. In this case, the ROM 63c also functions as the storage in the present invention.

Furthermore, in the present invention, the present interoperation program may be stored in the ROM 63c.

### Configuration of External Device

The external device 7 is a device that is connected to the information processing apparatus 6, and the information processing apparatus 6 executes an operation program, thereby controlling the operation of the external device 7, such as a digital camera capable of capturing a moving image and a still image, or a microphone capable of collecting sound. The external device 7 is connected to the information processing apparatus 6 via a communication cable (e.g., a universal serial bus (USB) cable). The operation of the external device 7 is controlled by the information processing apparatus 6 through the operation program. In the present embodiment, the operation of the external device 7 is executed as a part of the operation of the information processing apparatus 6. The external device 7 generates external information and transmits the generated external information to the information processing apparatus 6 as necessary. The external device 7 is mounted to the manufacturing apparatus 2, for example.

The "external information" is information to be generated by the external device 7. For example, when the external device 7 is a sensor, the external information is information indicating a detection result of the sensor. The external information includes not only information indicating a physical quantity, but also information acquired by an image sensor such as a capturing image.

### Operation of Interoperation System

Next, an operation of the present system 1 will be described below. In the following description, Figs. 1 to 10 are referred to as appropriate.

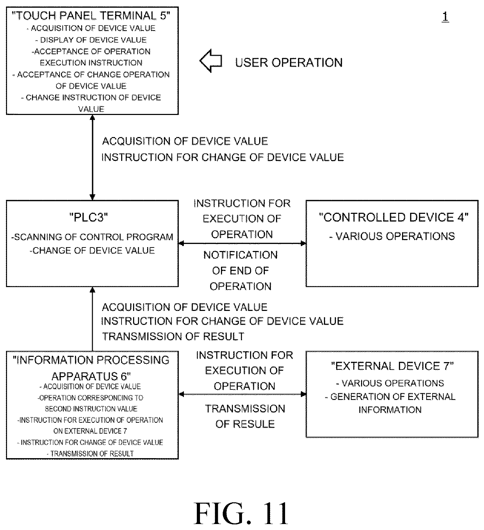

Fig. 11 is a schematic diagram illustrating an overview of a relationship among the components (the manufacturing apparatus 2, the PLC 3, the controlled device 4, the touch panel terminal 5, the information processing apparatus 6, and the external device 7) that constitute the present system 1.

In an operation of the present system 1, information being a reference is the device values stored in the PLC 3 (PLC storage 32). The PLC 3 repeatedly scans the control program (i.e., executes the control program) and changes one or more of the first instruction values, and thus causes the controlled device 4 corresponding to the one or more changed first device values to execute one or more of the operations corresponding to the one or more changed first device values, thereby controlling the one or more operations of the controlled device 4. Similarly, the PLC 3 changes one or more of the second instruction values, and thus causes the information processing apparatus 6 to execute one or more of the operations corresponding to the one or more changed second device values, thereby controlling the one or more operations of the information processing apparatus 6. Further, the PLC 3 changes one or more of the device values stored in the PLC storage 32, based on an instruction from the information processing apparatus 6. The controlled device 4 operates based on a signal from the PLC 3. The end of the operation of the controlled device 4 is notified to the PLC 3 by the controlled device 4 or an input device (sensor) corresponding to the controlled device 4. The touch panel terminal 5 acquires one or more of the device values from the PLC 3 at a predetermined timing (e.g., at a time of update of the operation screen P, or at each predetermined time interval), and displays the acquired device values to the user. Further, the touch panel terminal 5, based on a user operation, instructs the PLC 3 to change one or more of the device values stored in the PLC 3, or to execute various operations. The information processing apparatus 6 acquires one or more of the device values from the PLC 3 at a predetermined time interval, and, based on the change of one or more of the second instruction values, executes one or more of the operations (operation programs) corresponding to the one or more changed second device values. At this time, the information processing apparatus 6 controls one or more of the operations of the external device 7 as necessary. The external device 7 transmits a result of the operation and/or external information to the information processing apparatus 6 as necessary. After the end of the operation, the information processing apparatus 6 transmits the result of the operation to the PLC 3 as necessary. At this time, the information processing apparatus 6 provides an instruction for a change of one or more of the device values stored in the PLC storage 32 as necessary.

### Operation of PLC

During operation of the present system 1, the PLC control unit 33 repeatedly scans the control program, and evaluates each device value stored in the PLC storage 32. When a first instruction value of the device values has been changed, the PLC control unit 33 scans the program corresponding to the first instruction value, and causes the controlled device 4 to operate in accordance with the program. That is, for example, the PLC control unit 33 transmits a signal for instructing execution of the operation to the controlled device 4 corresponding to the changed first instruction value, and causes the controlled device 4 to operate. In this way, the PLC control unit 33 controls the operation of the controlled device 4, based on the first instruction value. The first instruction value is changed by the PLC change unit 331, for example, based on execution of the control program, a signal from the input device (e.g., sensor), notification from the controlled device 4, or an instruction for a change from the touch panel terminal 5 or the information processing apparatus 6. Meanwhile, when a second instruction value among the device values has been changed, the changed second instruction value is acquired by the information processing apparatus 6, and the information processing apparatus 6 executes the operation corresponding to the second instruction value. At this time, the PLC control unit 33 continues to repeatedly scan the control program. The second instruction value is changed by the PLC change unit 331, for example, based on execution of the control program or an instruction from the touch panel terminal 5. When a result of the operation is received from the information processing apparatus 6, the PLC change unit 331 changes the first instruction value and/or the second instruction value, based on the result.

In this configuration, the PLC storage 32 stores not only the first device values of the controlled device 4, but also the second device values of the information processing apparatus 6 and the external device 7. Thus, the first device values and the second device values are changeable by the PLC control unit 33 (the PLC change unit 331). Further, the first device values and the second device values are dynamically changeable to a first device value group and a second device value group corresponding to each operation condition in response to a change in an operation condition (e.g., a workpiece size). As a result, the information processing apparatus 6 becomes operable as a read-only apparatus (an execution apparatus for an operation program). Further, the PLC storage 32 stores one or more of the second instruction values for causing the information processing apparatus 6 to execute an operation. Thus, the PLC 3 is capable of causing the information processing apparatus 6 (and the external device 7) to execute an operation (i.e., be controlled) only by changing the second instruction value through the control program. In this way, the PLC control unit 33 executes the control program (the present auxiliary program), and thus the PLC 3 functions as the brain of the controlled device 4, the information processing apparatus 6, and the external device 7, thereby enabling the controlled device 4, the information processing apparatus 6, and the external device 7 to operate in conjunction with one another.

### Operation of Controlled Device

During operation of the present system 1, the controlled device 4 does not operate alone, and operates based on a signal from the PLC 3. The operation (the first operation) of the controlled device 4 includes, for example, turning ON/OFF lighting, switching lighting, conveying a workpiece, absorbing/opening a workpiece, turning ON/OFF air emission, and the like operations. The completion of the operation of the controlled device 4 is notified to the PLC control unit 33 by a signal of notification from the controlled device 4, or a detection signal by the input device (e.g., a sensor) corresponding to the controlled device 4.

### Operation of Touch Panel Terminal

During operation of the present system 1, the TP acquisition unit 531 acquires (retrieves) each device value stored in the PLC storage 32 at a predetermined timing. Then, the TP display control unit 533 causes the TP display operation unit 54 to display the operation screen P. When the operation screen P displayed on the TP display operation unit 54 is operated by a user, the TP control unit 53 specifies an operation content. When the operation content is an instruction for a change of the operation screen P, the TP display control unit 533 causes the TP display operation unit 54 to display the operation screen P in response to the user operation. When the operation content is an operation to change one device value in the change operation region P2, the TP change instruction unit 532 changes the device value corresponding to the operation among the device values stored in the TP storage 52, and also generates a signal that provides an instruction for a change of the device value (i.e., the first parameter value or the second parameter value) corresponding to the operation, and transmits the generated signal to the PLC control unit 33. The device value (i.e., the first parameter value or the second parameter value) is changed by the PLC change unit 331, based on the signal, and used for a subsequent operation (i.e., the first operation or the second operation). When the operation content is an operation execution instruction in the execution operation region P1, the TP change instruction unit 532 generates a signal that provides an instruction for a change of the device value (i.e., the first instruction value or the second instruction value) corresponding to the operation content, and transmits the generated signal to the PLC control unit 33. The device value (i.e., the first instruction value or the second instruction value) is changed by the PLC change unit 331, and, subsequently, the operation (i.e., the first operation or the second operation) of the controlled device 4 or the information processing apparatus 6 (and the external device 7) is executed.

Note that, in the present invention, the TP display control unit 533 may cause the TP operation display unit to update and display each device value always acquired by the TP acquisition unit 531, and the TP storage 52 may only temporarily store each device value (until the device value is updated). In this case, the TP change instruction unit 532 may generate a signal without changing the device values stored in the TP storage 52.

In this configuration, the touch panel terminal 5 acquires each device value at a predetermined timing, displays one or more of the device values in the change operation region P2 as necessary, and thus accepts a user operation to change one or more device values. These device values include not only the first parameter values of the controlled device 4, but also the second parameter values of the information processing apparatus 6 and the external device 7. Thus, the user can change the second parameter values by operating the TP display operation unit 54 without operating the PC operation unit 65. Similarly, the user can change the first parameter values of the controlled device 4 by operating the TP display operation unit 54. Thus, the user can change the first parameters by operating the TP display operation unit 54 without operating a dedicated input device of the controlled device 4. Further, the touch panel terminal 5 displays the execution operation region P1 on the TP display operation unit 54, and thus accepts an instruction for execution of an operation to the manufacturing apparatus 2, the controlled device 4, the information processing apparatus 6, and the external device 7 by the user. Thus, the user can instruct the manufacturing apparatus 2, the controlled device 4, the information processing apparatus 6, and the external device 7 to execute an operation only by selecting the execution operation region P1 displayed on the TP display operation unit 54. In this way, the present system 1 consolidates UI functions for changing parameter values and instructing execution of operations of the manufacturing apparatus 2, the controlled device 4, the information processing apparatus 6, and the external device 7 into the touch panel terminal 5 (TP display operation unit 54).

### Operation of External Device

During operation of the present system 1, the external device 7 does not operate alone, and operates in conjunction with the operation of the information processing apparatus 6. Operation conditions and set values of the external device 7 are stored in the PLC storage 32 and the PC storage 62 as the second parameter values. The external device 7 transmits information generated in a process of the operation to the information processing apparatus 6.

### Operation of Information Processing Apparatus

Next, an operation (a part of the present method) of the information processing apparatus 6 will be described below.

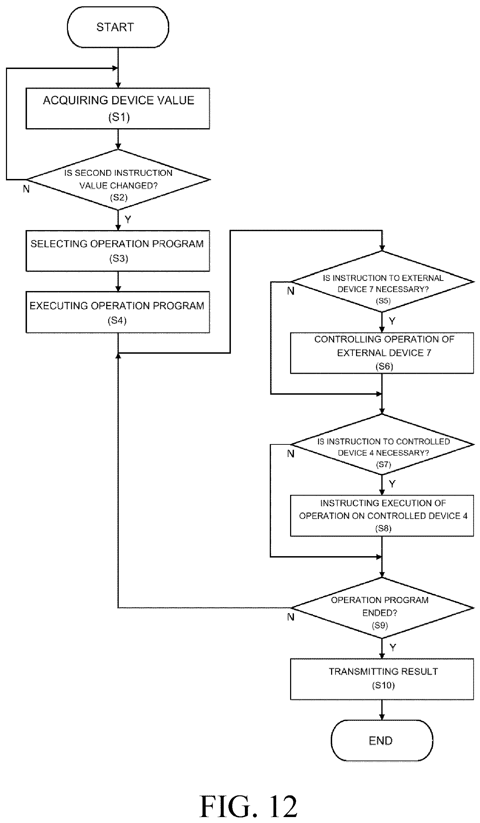

Fig. 12 is a flowchart illustrating one example of the operation of the information processing apparatus 6.

During operation of the present system 1, the PC acquisition unit 631 acquires (reads) one or more of the second device values stored in the PLC storage 32 at a predetermined time interval (S1: device value acquisition step/processing). The one or more acquired second device values are stored (overwritten) in the PC storage 62. At this time, when one or more of the second parameter values have been changed before or after the storage of the acquired second device values, any such changes of the second parameter values are also reflected in the information processing apparatus 6.

Then, the PC determination unit 632 determines whether any of the second instruction values included in the acquired second device values have been changed (S2: instruction value determination step/processing).

When none of the second instruction values have been changed ("N" in S2), the operation of the information processing apparatus 6 returns to the processing S1.

In contrast, when any of the second instruction values have been changed ("Y" in S2), the PC operation control unit 633 selects the operation program, based on the changed second instruction value (S3: operation program selection step/processing). Specifically, for example, the PC operation control unit 633 refers to the second correspondence information C2 stored in the PC storage 62 by using the second instruction value and PLC address information corresponding to the second instruction value, and identifies the operation program ID corresponding to the second instruction value. Then, the PC operation control unit 633 selects the operation program corresponding to the identified operation program ID. In other words, the PC operation control unit 633 selects the operation program corresponding to the second instruction value from among a plurality of operation programs, based on the second instruction value included in the one or more acquired second device values and the second correspondence information C2.

Then, the PC operation control unit 633 controls the operation of the information processing apparatus 6 by executing the elected operation program (S4: operation control step/processing). In this state, the information processing apparatus 6 operates based on the selected operation program among the plurality of operation programs. That is, the PC operation control unit 633 controls the operation corresponding to the selected operation program among operations of the information processing apparatus 6. In this state, the information processing apparatus 6 operates based on the one or more second parameter values stored in the PC storage 62.

Then, the PC determination unit 632 determines whether an instruction to the external device 7 to execute an operation is necessary in the operation program being executed (S5: operation instruction determination step/processing).

When the instruction to the external device 7 to execute an operation is necessary ("Y" in S5), the PC operation control unit 633 controls the operation of the external device 7 (S6: external device operation control step/processing). Specifically, for example, the PC operation control unit 633 generates a control signal that instructs the operation of the external device 7, and transmits the generated control signal to the external device 7. In this way, the PC operation control unit 633 controls the operation of the external device 7 via the operation of the operation program. In other words, the PC operation control unit 633 controls the operation of the external device 7 as a part of the operation of the information processing apparatus 6 (i.e., the second operation). In short, the second operation includes the operation of the external device 7. In this state, the external device 7 operates based on the one or more second parameter values stored in the PC storage 62 (i.e., acquired by the PC acquisition unit 631). The second parameter is acquired by the external device 7, for example, via the control signal. When information generated in the process of the operation exists, the external device 7 transmits the information to the information processing apparatus 6.

In contrast, when the instruction to the external device 7 to execute an operation is not necessary ("N" in S5), the operation of the information processing apparatus 6 proceeds to processing S7 described later.

Then, the PC determination unit 632 determines whether an instruction to the controlled device 4 to execute an operation is necessary as a result of the operation of the information processing apparatus 6 (S7). That is, for example, the PC determination unit 632 determines whether an instruction to the controlled device 4 to execute the operation is necessary in the operation program.

When the instruction to the controlled device 4 to execute the operation is necessary ("Y" in S7), the PC operation instruction unit 634 instructs the PLC 3 to execute the operation of the controlled device 4 (S8: operation instruction step/processing). In the present embodiment, the PC operation instruction unit 634 does not directly instruct a change of the first instruction value, but instead instruct a change of the second instruction value, and causes the PLC change unit 331 (that is implemented by the control program) to change the first instruction value by using the change of the second instruction value as a trigger. That is, the PC operation instruction unit 634 indirectly instructs the change of the first instruction value. Specifically, for example, the PC operation instruction unit 634 refers to the first correspondence information C1 by using the operation ID corresponding to the operation of the controlled device 4, and acquires both PLC address information in which the second instruction value to be changed for changing the first instruction value is stored and the second instruction value. Then, the PC operation instruction unit 634 generates a signal that instructs the change of the second instruction value, based on the acquired PLC address information and the acquired second instruction value, and transmits the generated signal to the PLC control unit 33. The PLC change unit 331 changes the corresponding second instruction value, based on the signal. Then, the PLC change unit 331 (that is implemented by the control program) executes the operation of the controlled device 4 corresponding to the first instruction value, based on the changed second instruction value. As a result, the PLC control unit 33 controls the operation of the controlled device 4 corresponding to the changed first instruction value. In this way, the PC operation instruction unit 634 indirectly instructs the change of the first instruction value, and thus the present method can include safety-related processing, such as an interlock release processing, between the processing of instructing the execution of the operation of the controlled device 4 and the processing of executing the operation of the controlled device 4.

Note that, in the present invention, the PC operation instruction unit 634 may directly instruct the change of the first instruction value. That is, for example, the PC operation control unit 633 may generate a signal that instructs the change of the first instruction value corresponding to the controlled device 4, and transmit the generated signal to the PLC control unit 33. In this case, the first correspondence information C1 stores PLC address information in which the first instruction value corresponding to the operation of the controlled device 4 is stored.

In contrast, when the instruction to the controlled device 4 to execute the operation is not necessary ("N" in S7), the operation of the information processing apparatus 6 proceeds to processing S9 described later.

Then, the PC operation control unit 633 determines whether the operation program ends (S9).

When the operation program ends ("Y" in S9), the PC control unit 63 transmits a result of the operation to the PLC control unit 33 (S10). Specifically, for example, the PC control unit 63 generates a signal including the result of the operation, and transmits the generated signal to the PLC control unit 33. The signal includes an instruction to change a device value corresponding to an end of the operation (e.g., an instruction to restore the second device value determined to have been changed in the processing S2), and, if necessary, a device value indicating a result of the operation (e.g., a value indicating some determination result or an instruction to execute the operation of the controlled device 4).

In contrast, when the operation program does not end ("N" in S9), the operation of the information processing apparatus 6 returns to the processing S5.

In this way, the information processing apparatus 6 acquires one or more of the second instruction values stored in the PLC storage 32 at a predetermined time interval, and thus selects and executes the operation program corresponding to the changed second instruction value and transmits the result of the operation program to the PLC 3. Further, the information processing apparatus 6 controls the operation of the external device 7 corresponding to the operation program and receives the result of the operation. In this configuration, similarly to the controlled device 4, the PLC 3 is capable of controlling the operations of the information processing apparatus 6 and the external device 7 merely by changing one or more of the device values (i.e., the second instruction values) using the control program. As a result, the PLC 3 is capable of executing, via the operations of the information processing apparatus 6 and the external device 7, complex operations and complex information processing that cannot be executed by the PLC 3 and the controlled device 4 (e.g., execution of image processing, switching among a plurality of image processing operations, execution of different types of determination processing, detection and notification of abnormalities, transmission of e-mails, and the like). That is, in the present system 1, the PLC 3 is capable of implementing functions that are executable by the information processing apparatus 6, which is a PC, by changing the second instruction value.

The information processing apparatus 6 acquires one or more of the second device values stored in the PLC storage 32 at a predetermined time interval, and changes one or more of the second device values stored in the PLC storage 32 as necessary. In this configuration, separation of a write region and a read region in a data register memory region of the PLC storage 32 is not required, and shared use of both regions can be achieved.

Information input from an input device connected to the PLC 3 is included in information acquired by the information processing apparatus 6 (i.e., the second device value), thereby enabling the information processing apparatus 6 to acquire the information at a predetermined time interval, generate a graph of manufacturing data and the like, and display the generated graph on the PC display unit 64.

The information processing apparatus 6 is connected to the PLC 3 via the PC communication unit 61, which is a known communication interface. Thus, the information processing apparatus 6 is also easily connected to a PLC from a different manufacturer. Accordingly, in a manufacturing apparatus equipped with any PLC, the information processing apparatus 6 can be connected, enabling various functions to be easily added.

In the operation of an operation program, the information processing apparatus 6 is capable of controlling the operation of the controlled device 4 by transmitting a control signal indicating a change of a first instruction value to the PLC 3. As a result, the information processing apparatus 6 is capable of executing more complex operations by operating in conjunction with the controlled device 4 and the external device 7.

The specifications of the PC constituting the information processing apparatus 6 can be freely selected, depending on the number of functions to be implemented by the information processing apparatus 6 and the magnitude of the processing load of each processing.

In this way, the information processing apparatus 6 is connected to the PLC 3, and one or more of the second device values necessary for the operation of the information processing apparatus 6 is stored in the PLC storage 32, thereby enhancing the degree of freedom in selecting functions that are implementable in the manufacturing apparatus 2 in which the operation is controlled by the PLC 3. Further, the external device 7 is connected to the information processing apparatus 6, and one or more of the second device values necessary for an operation of the external device 7 is stored in the PLC storage 32, and thus the operation of the external device 7 is executed as a part of the operation of the information processing apparatus 6, thereby further enhancing the degree of freedom in selecting functions that are implementable in the manufacturing apparatus 2 in which the operation is controlled by the PLC 3.

Note that, in the present invention, the operation of the information processing apparatus 6 is not limited to the flow illustrated in Fig. 12.

### Operation among Elements Constituting Present System

Next, one example of an operation (i.e., the present method) among the components (the manufacturing apparatus 2, the PLC 3, the controlled device 4, the touch panel terminal 5, the information processing apparatus 6, and the external device 7) constituting the present system 1 will be described below.

In the following description, it is assumed that the controlled device 4a is a servo controller of a servo motor, and the controlled device 4b is a light source. It is assumed that the external devices 7a and 7b are capturing devices that capture the manufacturing apparatus 2 or a related article described later and generate a capturing image. One example of a flow in which the PLC 3, the controlled device 4a and 4b, the information processing apparatus 6, and the external devices 7a and 7b operate in conjunction with one another by a user operating the execution operation region P1 displayed on the TP display operation unit 54 will be described below.

The "related article" is an article related to the manufacturing apparatus 2. The related article includes, for example, a member constituting the manufacturing apparatus 2, a workpiece to be handled in the manufacturing apparatus 2, and the controlled device 4.

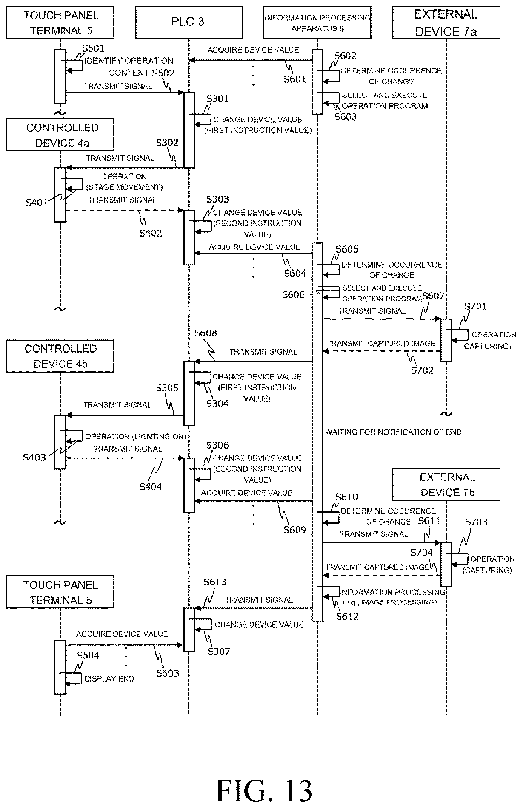

Fig. 13 is a sequence diagram illustrating one example of operations among the components in the present system 1.

As described above, during operation of the present system 1, the PC acquisition unit 631 of the information processing apparatus 6 acquires one or more of the second device values stored in the PLC storage 32 at a predetermined time interval (S601: device value acquisition step/processing). At this time, every time the one or more second device values are acquired, the PC determination unit 632 determines whether any of the second instruction values have been changed (S602: instruction value determination step/processing). When any of the second instruction values have been changed, the PC operation control unit 633 selects and executes the operation program, based on the changed second instruction value (S603: operation execution step/processing). As a result, the information processing apparatus 6 operates based on the operation program. In the present example, it is assumed that the operation program includes an instruction to operate the external devices 7a, an instruction to operate the controlled device 4b, an instruction to operate the external devices 7b, and execution of image processing in this order.

When the execution operation region P1 displayed on the operation screen P of the TP display operation unit 54 is operated by a user, the TP control unit 53 identifies operation content corresponding to the operated execution operation region P1 (in the present example, an instruction to operate the controlled device 4a) (S501). Then, the TP change instruction unit 532 transmits, to the PLC 3, a signal that instructs a change of the device value (i.e., the first instruction value) corresponding to the operation content (S502).

The PLC change unit 331 changes the first instruction value being a target of the change, based on the received signal (the content of the instruction) (S301: first instruction value change step/processing). Then, the PLC control unit 33 transmits, to the controlled device 4a corresponding to the changed first instruction value, a signal that instructs the execution of an operation, based on the changed first instruction value and a control program (S302), and executes the operation of the controlled device 4a.

The controlled device 4a operates, based on the received signal (S401: for example, a movement operation of a stage). When the operation of the controlled device 4a ends, the controlled device 4a or an input device (e.g., a photoelectric sensor) that detects the operation of the controlled device 4a transmits, to the PLC 3, a signal indicating the end of the operation (S402).

The PLC change unit 331 changes the second instruction value stored in the PLC storage 32, based on the received signal (S303: second instruction value change step/processing). Herein, the change of the second instruction value in the processing S303 is based on the operation on the TP operation display unit 54 in the processing S501. In other words, in the present example, the operation on the TP operation display unit 54 in the processing S501 includes an instruction for the indirect change of the second instruction value, and the PLC change unit 331 changes the second instruction value, based on the operation on the TP operation display unit 54 in the processing S501. Then, one or more of the second device values including the changed second instruction value are acquired by the PC acquisition unit 631 at a predetermined timing (S604: device value acquisition step/processing). Then, the PC determination unit 632 determines that the second instruction value has been changed (S605: instruction value determination step/processing), and the PC operation control unit 633 executes the operation program, based on the changed second instruction value (S606: execution operation step/processing). As a result, the information processing apparatus 6 operates based on the operation program. In the present example, it is assumed that this operation program includes an instruction for an operation (image capturing) on the external devices 7a and 7b.

The PC operation control unit 633 transmits, to the external devices 7a, a signal that instructs to the external devices 7a to execute the operation (S607). The external devices 7a captures a subject (e.g., a workpiece), based on the received signal (S701), and transmits the captured image to the information processing apparatus 6 (S702).

When the information processing apparatus 6 receives the captured image, the PC operation instruction unit 634 identifies the content of an operation to be instructed to the controlled device 4b, based on the operation program, and transmits, to the PLC 3, a signal that instructs a change of the second device value, based on the first correspondence information C1 (S608: device value change instruction step/processing). In other words, the PC operation instruction unit 634 instructs the PLC 3 to execute the operation of the controlled device 4, based on the results of the operations of the information processing apparatus 6 and the external devices 7a. The captured image is stored in the PC storage 62. At this time, the information processing apparatus 6 is in a standby state until the device value indicating the completion of the operation of the controlled device 4b is acquired.

Note that the information processing apparatus 6 may be in a standby state until a predetermined time elapses instead of acquiring the device value indicating the completion of the operation.

The PLC change unit 331 changes the second instruction value being a target of the change, based on the received signal, and changes a first instruction value, based on the change of the second instruction value (S304: first instruction value change step/processing). Then, the PLC control unit 33 transmits, to the controlled device 4b corresponding to the changed first instruction value, a signal that instructs the execution of an operation (S305).

The controlled device 4b operates based on the received signal (S403: e.g., lighting ON operation). When the operation of the controlled device 4b is completed, the controlled device 4b or an input device that detects the operation of the controlled device 4b (e.g., a photoelectric sensor) transmits, to the PLC 3, a signal indicating the end of the operation (S404).

The PLC control unit 33 changes the device value (i.e., the second instruction value) that notifies the end of the operation of the controlled device 4b, based on the received signal (S306: second instruction value change step/processing). Then, one or more of the second device values including the changed device value are acquired by the PC acquisition unit 631 at a predetermined timing (S608: device value acquisition step/processing). Then, the PC determination unit 632 determines that the second instruction value has been changed (S610: instruction value determination step/processing), and the PC operation control unit 633 transmits, to the external devices 7b, a signal that instructs the external devices 7b to execute the operation, based on the changed second instruction value (S611: operation execution step/processing). The external device 7b captures a subject (e.g., a workpiece), based on the control signal (S703), and transmits the captured image to the information processing apparatus 6 (S704).

When the information processing apparatus 6 receives the captured image, the PC operation control unit 633 executes information processing (e.g., image processing and the like) using two captured images (i.e., external information), based on the operation program (S612: operation execution step/processing). At this time, one or more of the device values (i.e., one or more of the second device values) stored in the PLC storage 32 are reflected in a part or all of various parameter values used in the information processing (e.g., a threshold value of binarization, a perspective projection transformation matrix) and the information processing is executed accordingly. Subsequently, the operation program ends. Then, the PC operation instruction unit 634 transmits, to the PLC 3, a signal that notifies the end of the operation (S613).

The PLC change unit 331 changes the device value indicating the end of a series of the operations, based on the received signal (S307). The changed device value is acquired by the TP acquisition unit 531 at a predetermined timing (S503), and the TP display control unit 533 displays the end of the operation on the operation screen P (S504).

Note that, in the present invention, the operation of the present system 1 is not limited to the operation illustrated in Fig. 13. That is, for example, in the present system 1, only the touch panel terminal 5, the PLC 3, and the information processing apparatus 6 may operate in conjunction with one another (e.g., transmission of e-mails, acquisition of screen shots, and the like). Further, for example, in the present system 1, only the touch panel terminal 5, the PLC 3, the information processing apparatus 6, and the external device 7 may operate in conjunction with one another (e.g., acquisition of a captured image, switching of display images, and the like). Further, for example, in the present system 1, the information processing apparatus 6 need not instruct an indirect change of the first instruction value during or at the end of the operation.

In the present invention, the information processing apparatus 6 (i.e., the PC control unit 63) may subsequently execute another operation program after executing a certain operation program.

In the present invention, the information processing apparatus 6 may end an operation program before the processing S608, and may also transmit, to the PLC 3, a signal that notifies the end in the processing S608. Then, after the PC operation control unit 633 acquires a changed second instruction value in the processing S609, the PC operation control unit 633 may select an operation program, based on the second instruction value, and execute the selected operation program.

### Conclusion

According to the embodiments described above, the present system 1 includes the PLC 3, the controlled device 4, and the information processing apparatus 6. The PLC 3 includes the PLC control unit 33 and the PLC storage 32. The PLC storage 32 stores a plurality of first device values to be used for controlling an operation of the controlled device 4, and a plurality of second device values to be used for controlling an operation of the information processing apparatus 6. The information processing apparatus 6 includes the PC acquisition unit 631, the PC determination unit 632, and the PC operation control unit 633. The PC acquisition unit 631 acquires one or more of the second device values stored in the PLC storage 32 at a predetermined time interval. The PC determination unit 632 determines, after the acquisition of the one or more second device values, whether any of the second instruction values included in the acquired second device values have been changed. The PC operation control unit 633 controls, after the acquisition of the one or more second device values, the operation corresponding to the second instruction value included in the acquired second device values (i.e., the second operation) among the operations of the information processing apparatus 6. According to this configuration, the information processing apparatus 6 is capable of automatically recognize a change of a second instruction value stored in the PLC storage 32, and automatically execute the operation corresponding to the second instruction value (i.e., the second operation). As a result, in the present system 1, any function that is implementable by the information processing apparatus 6 can also be implemented under the control of the PLC 3 and can be added to the manufacturing apparatus 2. That is, the degree of freedom in selecting functions that are implementable in the manufacturing apparatus 2, in which the operation is controlled by the PLC 3, is enhanced.

Further, according to the embodiments described above, the information processing apparatus 6 includes the PC operation instruction unit 634 that instructs the PLC 3 to execute an operation of the controlled device 4, based on the result of the operation of the information processing apparatus 6. The PLC change unit 331 changes a first instruction value corresponding to an operation of the controlled device 4, based on the instruction from the PC operation instruction unit 634. According to this configuration, the information processing apparatus 6 can execute all operations executable by the PLC 3 (i.e., operations of the controlled device 4) in conjunction with its own operations. That is, the present system 1 is capable of executing more complex operations by causing the controlled device 4 and the information processing apparatus 6 to operate in conjunction with each other. As a result, the number of selectable functions that can be implemented in the information processing apparatus 6 increases. Accordingly, the degree of freedom in selecting functions that are implementable in the manufacturing apparatus 2, in which the operation is controlled by the PLC 3, is further enhanced.

According to the embodiments described above, the information processing apparatus 6 is capable of executing a plurality of different operations. Each of the plurality of second instruction values corresponds to each of the plurality of operations of the information processing apparatus 6. The PLC control unit 33 changes the second instruction value stored in the PLC storage 32, based on the operation corresponding to the first instruction value. According to this configuration, the present system 1 is capable of executing more complex operations by causing the information processing apparatus 6 and the controlled device 4 to operate in conjunction with each other. As a result, the number of selectable functions that can be implemented in the information processing apparatus 6 further increases. Accordingly, the degree of freedom in selecting functions that are implementable in the manufacturing apparatus 2, in which the operation is controlled by the PLC 3, is further enhanced.

According to the embodiments described above, a plurality of first device values includes a plurality of first instruction values, and each of the first instruction values corresponds to each of operations of the controlled device 4. The information processing apparatus 6 includes the PC storage 62. The PC storage 62 stores the first correspondence information C1 indicating a correspondence between each of operations of the controlled device 4 and each of contents of instructions. The PC operation instruction unit 634 instructs the PLC 3 to execute an operation of the controlled device 4, based on the result of the operation of the information processing apparatus 6 and the first correspondence information C1. According to this configuration, the information processing apparatus 6 is capable of selecting and executing an operation of the controlled device 4 merely by storing the first correspondence information.

According to the embodiments described above, a plurality of second device values includes a plurality of second instruction values, and each of the second instruction values corresponds to each of operations of the information processing apparatus 6 (and the external device 7). The PC storage 62 stores operation programs respectively corresponding to each of the plurality of operations, and the second correspondence information C2 indicating a correspondence between each of the second instruction values and each of the operation programs. The PC operation control unit 633 selects, based on the changed second instruction value and the second correspondence information C2, the operation program corresponding to the second instruction value from among the plurality of operation programs, executes the selected operation program, and thus controls an operation of the information processing apparatus 6. According to this configuration, the information processing apparatus 6 is capable of selecting and executing the plurality of operation programs according to each of the plurality of second instruction values. In this case, by storing an operation program corresponding to a desired function in the PC storage 62, the function can be implemented in the manufacturing apparatus 2 in which an operation is controlled by the PLC 3.

According to the embodiments described above, the present system 1 includes the external device 7 connected to the information processing apparatus 6. The PC operation control unit 633 controls an operation of the external device 7 as the operation corresponding to the second instruction value (i.e.. the second operation). According to this configuration, the information processing apparatus 6 is capable of executing more complex operations using the external device 7. Further, an operation of the external device 7 corresponding to a desired function is controlled, and thus the function can be implemented in the manufacturing apparatus 2 in which the operation is controlled by the PLC 3.

According to the embodiments described above, the PC operation control unit 633 executes an operation such as image processing as an operation corresponding to the second instruction value by using external information (e.g., a captured image) acquired from the external device 7 (e.g., a captured apparatus). According to this configuration, the degree of freedom of functions that are implementable in the information processing apparatus 6 is further enhanced. Thus, the degree of freedom in selecting functions that are implementable in the manufacturing apparatus 2, in which the operation is controlled by the PLC 3, is further enhanced.

According to the embodiments described above, the plurality of second device values includes one or more parameter values used for an operation of the external device 7. According to this configuration, the parameter value used for the operation of the external device 7 can be changed by a control program of the PLC 3.

According to the embodiments described above, the present system 1 includes the touch panel terminal 5 that is connected to the PLC 3 and accepts a user operation. The touch panel terminal 5 includes the TP acquisition unit 531, the TP display operation unit 54, and the TP change instruction unit 532. The TP acquisition unit 531 acquires one or more of the second device values stored in the PLC storage 32 at a predetermined timing. The TP display operation unit 54 displays the one or more acquired second device values. The TP change instruction unit 532 instructs a change of one or more second device values stored in the PLC storage 32, based on a user operation performed on one or more of the second device values displayed on the TP display operation unit 54. The PLC change unit 331 changes the second device value corresponding to the instruction, based on the instruction from the TP change instruction unit 532. According to this configuration, the user can check parameter values of the information processing apparatus 6 and the external device 7 by displaying the one or more second device values on the TP display operation unit 54, and can easily change the parameter values by changing the second device values. In this way, the user can dynamically change the parameter values of the information processing apparatus 6 and the external device 7 by operating the TP display operation unit 54 of the touch panel terminal 5 without operating the PC operation unit 65 of the information processing apparatus 6.

According to the embodiments described above, the TP display operation unit 54 displays the execution operation region P1 operated by the user in order to start an operation of the information processing apparatus 6. The TP change instruction unit 532 instructs a change of any second instruction values stored in the PLC storage 32, based on a user operation performed on the execution operation region P1 displayed on the TP display operation unit 54. The PLC change unit 331 changes the second instruction value corresponding to the instruction, based on the instruction from the TP change instruction unit 532. According to this configuration, the user can instruct the information processing apparatus 6 and the external device 7 to execute an operation merely by selecting the execution operation region P1 displayed on the operation screen P of the TP display operation unit 54. In this way, in the present system 1, the UI for changing parameter values of the information processing apparatus 6 and the external device 7 and for instructing operations is consolidated into the touch panel terminal 5 (i.e., TP display operation unit 54).

According to the embodiments described above, the information processing apparatus 6 is constituted by a PC including the CPU 63a that functions as the PC acquisition unit 631, the PC determination unit 632, and the PC operation control unit 633. According to this configuration, the specifications of the PC constituting the information processing apparatus 6 can be freely selected, depending on the number of functions to be implemented by the information processing apparatus 6 and the magnitude of the processing load of each processing.

According to the embodiments described above, the present method executed by the present system 1 includes a device value acquisition step, an instruction value determination step, and an operation control step. According to this configuration, in the present system 1, the information processing apparatus 6 is capable of automatically recognizing a change of a second instruction value stored in the PLC storage 32, and automatically executing the operation corresponding to the second instruction value (i.e., the second operation). As a result, in the present system 1, any function that can be implemented by the information processing apparatus 6 can also be implemented under the control of the PLC 3 and can be added to the manufacturing apparatus 2. That is, the degree of freedom in selecting functions that can be implemented in the manufacturing apparatus 2, in which the operation is controlled by the PLC 3, is enhanced.

According to the embodiments described above, the present interoperation program executed by the information processing apparatus 6 causes the CPU 63a to execute device value acquisition processing, instruction value determination processing, and operation control processing. According to this configuration, in the present system 1, the information processing apparatus 6 is capable of automatically recognizing a change of a second instruction value stored in the PLC storage 32, and automatically executing the operation corresponding to the second instruction value (i.e., the second operation). As a result, in the present system 1, any function that is implementable by the information processing apparatus 6 can also be implemented under the control of the PLC 3 and can be added to the manufacturing apparatus 2. That is, the degree of freedom in selecting functions that are implementable in the manufacturing apparatus 2, in which the operation is controlled by the PLC 3, is enhanced.

According to the embodiments described above, the present auxiliary program executed by the PLC 3 causes the PLC control unit 33 to execute second instruction value change processing and first instruction value change processing. According to this configuration, in the present system 1, the controlled device 4 and the information processing apparatus 6 can operate in conjunction with each other via the PLC 3. As a result, in the present system 1, any function that is implementable by the information processing apparatus 6 can also be implemented under the control of the PLC 3 and can be added to the manufacturing apparatus 2. That is, the degree of freedom in selecting functions that are implementable in the manufacturing apparatus 2, in which the operation is controlled by the PLC 3, is enhanced.

### Other Embodiment

Note that, in the present invention, the present system 1 need not include the touch panel terminal 5. In this case, although an input device for inputting a device value (e.g., the PC operation unit 65 for the second device value) needs to be provided separately, any function that is implementable in the information processing apparatus 6 can also be implemented under the control of the PLC 3.

In the present invention, the present system 1 need not include the external device 7. Even in this case, any function that is implementable by the information processing apparatus 6 can also be implemented under the control of the PLC 3 and can be added to the manufacturing apparatus 2.

In the present invention, the number of the external devices 7 included in the present system 1 is not limited to a plurality and may be "one".

In the present invention, the number of the PLCs 3 included in the manufacturing apparatus 2 is not limited to "one". That is, for example, the manufacturing apparatus 2 may include a plurality of PLCs 3. In this case, the manufacturers of the respective PLCs 3 may be the same or different.

In the present invention, the number of the controlled devices 4 included in the manufacturing apparatus 2 is not limited to a plurality and may be "one".

In the present invention, the controlled device 4 may be any device that can be controlled by a general-purpose PLC, and is not limited to the examples described in the present embodiment.

In the present invention, the external device 7 may be any device that is connected to a PC and controllable by an operation program executed by the PC, and the device is not limited to a digital camera. That is, for example, the external device 7 may be a sensor that acquires sensor information related to the manufacturing apparatus 2 or to associated items related to the manufacturing apparatus 2, such as a robot arm and a workpiece.

In the present invention, the touch panel terminal 5 only needs to include a touch panel and a processor that functions at least as the TP acquisition unit 531 and the TP change instruction unit 532, and is not limited to a touch panel PC.

In the present invention, the PC control unit 63 may function at least as the PC acquisition unit 631, the PC determination unit 632, and the PC operation control unit 633, and need not necessarily function as the PC operation instruction unit 634. That is, for example, the PC control unit 63 may transmit only a result of an operation to the PLC 3, and need not change a first instruction value. Also, in this configuration, the operation of the information processing apparatus 6 is controlled by the PLC 3, and the degree of freedom in selecting functions that are implementable in the manufacturing apparatus 2, in which the operation is controlled by the PLC 3, is enhanced.

In the present invention, the present system 1 may include a plurality of information processing apparatuses 6.

In the present invention, the present interoperation program and the present interoperation auxiliary program may be stored, in an installable file format or an executable file format, on a non-transitory storage medium (e.g., a compact disk (CD), a digital versatile disc (DVD), a universal serial bus (USB) memory, or the like) and may be provided to the PLC 3 and the information processing apparatus 6 via a device capable of acquiring (reading) the programs.

### Aspects of Present Invention

Next, aspects of the present invention recognized from the embodiments described above will be described below with reference to the terms and reference signs described in the embodiments.

A first aspect of the present invention is an interoperation system (e.g., the interoperation system 1) including: a controlled device (e.g., the controlled device 4) included in a manufacturing apparatus (e.g., the manufacturing apparatus 2); a PLC (e.g., the PLC 3) configured to control a first operation of the controlled device; and an information processing apparatus (e.g., the information processing apparatus 6) that is connected to the PLC via a communication network line and is configured to operate in conjunction with the PLC, in which the PLC includes a PLC control unit (e.g., the PLC control unit 33) configured to control the first operation, and a PLC storage (e.g., the PLC storage 32) configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, and the information processing apparatus includes a device value acquisition unit (e.g., the PC acquisition unit 631) configured to acquire one or more of the second device values stored in the PLC storage at a predetermined time interval, a determination unit (e.g., the PC determination unit 632) configured to determine, after the acquisition of the one or more second device values, whether any of the second instruction values included in the acquired second device values have been changed, and an operation control unit (e.g., the PC operation control unit 633) configured to control, when any of the second instruction values have been changed, the second operation corresponding to the changed second instruction value among the second operations. According to this configuration, the degree of freedom in selecting functions that are implementable in the manufacturing apparatus, in which the operation is controlled by the PLC, is enhanced.

A second aspect of the present invention is the interoperation system in the first aspect in which the information processing apparatus includes an operation instruction unit (e.g., the PC operation instruction unit 634) configured to instruct the PLC to execute the first operation of the controlled device, based on a result of the second operation, and the PLC control unit changes the first instruction value corresponding to the first operation and stored in the PLC storage, based on an instruction from the operation instruction unit. According to this configuration, the information processing apparatus and the controlled device operate in conjunction with each other, enabling the present system to execute more complex operations. As a result, the number of selectable functions that can be implemented in the present system increases.

A third aspect of the present invention is the interoperation system in the second aspect in which the information processing apparatus is capable of executing a plurality of different second operations, the plurality of second device values includes the plurality of second instruction values, each of the plurality of second instruction values corresponds to each of the plurality of second operations, and the PLC control unit changes one of the second instruction values among the plurality of second instruction values stored in the PLC storage, based on a result of the first operation corresponding to the instruction. According to this configuration, the number of selectable functions that can be implemented in the present system further increases.

A fourth aspect of the present invention is the interoperation system in the second aspect in which the controlled device is capable of executing a plurality of different first operations, the plurality of first device values includes the plurality of first instruction values, each of the first instruction values corresponds to each of the first operations, the information processing apparatus includes a storage (e.g., the PC storage 62) configured to store first correspondence information (e.g., the first correspondence information C1) indicating a correspondence between each of the first operations and each content of the instructions, and the operation instruction unit instructs the PLC to execute the first operation of the controlled device, based on the result of the second operation and the first correspondence information. According to this configuration, the controlled device operates in conjunction with the information processing apparatus, thereby further increasing the number of selectable functions that can be implemented in the present system.

A fifth aspect of the present invention is the interoperation system in the first aspect in which the information processing apparatus is capable of executing a plurality of different second operations, the plurality of second device values includes the plurality of second instruction values, each of the second instruction values corresponds to each of the second operations, the information processing apparatus includes a storage configured to store operation programs respectively corresponding to each of the second operations, and second correspondence information (e.g., the second correspondence information C2) indicating a correspondence between each of the second instruction values and each of the operation programs, and the operation control unit selects the operation program corresponding to the second instruction value from among the plurality of operation programs, based on the changed second instruction value and the second correspondence information, and controls the second operation by executing the selected operation program. According to this configuration, the information processing apparatus can select and execute a plurality of operation programs in accordance with respective second instruction values.

A sixth aspect of the present invention is the interoperation system in the first aspect further including an external device (e.g., the external device 7) different from the controlled device in which the operation control unit controls an operation of the external device as the second operation. According to this configuration, by controlling the operation of the external device corresponding to a desired function, the desired function can be implemented in the manufacturing apparatus in which the operation is controlled by the PLC.

A seventh aspect of the present invention is the interoperation system in the first aspect further including an external device different from the controlled device in which the operation control unit executes the second operation by using external information acquired from the external device. According to this configuration, the degree of freedom in selecting functions that are implementable in the manufacturing apparatus is further enhanced.

An eighth aspect of the present invention is the interoperation system in the sixth or seventh aspect in which the plurality of second device values includes one or more parameter values used for an operation of the external device. According to this configuration, a parameter value used for the operation of the external device can be changed by a control program of the PLC.

A ninth aspect of the present invention is the interoperation system in any of the first to eighth aspects further including a touch panel terminal (e.g., the touch panel terminal 5) that is connected to the PLC and is configured to accept a user operation in which the touch panel terminal includes a TP acquisition unit (e.g., the TP acquisition unit 531) configured to acquire one or more of the second device values stored in the PLC storage, a TP display unit (e.g., the TP display operation unit 54) configured to display one or more of the acquired second device values, and a TP change instruction unit (e.g., the TP change instruction unit 532) configured to instruct a change of one or more of the second device values stored in the PLC storage, based on the user operation on one or more of the second device values displayed on the TP display unit, and the PLC control unit changes, based on an instruction from the TP change instruction unit, the second device value corresponding to the instruction and stored in the PLC storage. According to this configuration, a user can change parameter values of the information processing apparatus and the external device by operating the TP display operation unit of the touch panel terminal without operating the information processing apparatus.

A tenth aspect of the present invention is the interoperation system in the ninth aspect in which the TP display unit displays an operation region (e.g., the execution operation region P1 and the change operation region P2) to be operated by the user in order to change the second instruction value, the TP change instruction unit instructs a change of the second instruction value stored in the PLC storage, based on the user operation on the operation region displayed on the TP display unit, and the PLC control unit changes, based on the instruction from the TP change instruction unit, the second instruction value corresponding to the instruction and stored in the PLC storage. According to this configuration, the UI for a parameter value change operation and an instruction for operations of the information processing apparatus and the external devices is consolidated in the touch panel terminal.

An eleventh aspect of the present invention is the interoperation system in the first aspect in which the information processing apparatus is configured with a computer including a processor (e.g., the CPU 63a) configured to function as the device value acquisition unit, the determination unit, and the operation control unit. According to this configuration, the specifications of a PC constituting the information processing apparatus can be freely selected.

A twelfth aspect of the present invention is an interoperation method executed by an interoperation system including a controlled device included in a manufacturing apparatus, a PLC configured to control a first operation of the controlled device, and an information processing apparatus that is connected to the PLC via a communication network line and is configured to operate in conjunction with the PLC, in which the PLC includes a PLC control unit configured to control the first operation, and a PLC storage configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, the interoperation method including: a device value acquisition step (e.g., the device value acquisition step: S1) of acquiring one or more of the second device values including the second instruction values stored in the PLC storage at a predetermined time interval; an instruction value determination step (e.g., the instruction value determination step: S2) of determining, after the acquisition of the one or more second device values, whether any of the second instruction values included in the acquired second device values have been changed; and an operation control step (e.g., the operation control step: S4) of controlling, when any of the second instruction values have been changed, the second operation corresponding to the changed second instruction value among the second operations. According to this configuration, the degree of freedom in selecting functions that are implementable in the manufacturing apparatus, in which the operation is controlled by the PLC, is enhanced.

A thirteenth aspect of the present invention is an interoperation program (e.g., the present program) executed by an information processing apparatus that is connected to, via a communication network line, a PLC configured to control a first operation of a controlled device included in a manufacturing apparatus and is configured to operate in conjunction with the PLC, in which the PLC includes a PLC storage configured to store a plurality of first device values to be used for controlling the first operation, and a plurality of second device values to be used for controlling a second operation of the information processing apparatus, in which the plurality of second device values includes one or more second instruction values for causing the second operation to be executed, and the information processing apparatus includes a processor (e.g., the CPU 63a), the interoperation program causing the processor to execute: device value acquisition processing (e.g., the device value acquisition step: S1) of acquiring one or more of the second device values stored in the PLC storage at a predetermined time interval; instruction value determination processing (e.g., the instruction value determination step: S2) of determining, after the acquisition of the one or more second device values, whether any of the second instruction values included in the acquired second device values have been changed; and operation control processing (e.g., the operation control step: S4) of controlling, when any of the second instruction values have been changed, the second operation corresponding to the changed second instruction value among the second operations. According to this configuration, the degree of freedom in selecting functions that are implementable in the manufacturing apparatus, in which the operation is controlled by the PLC, is enhanced.

A fourteenth aspect of the present invention is an auxiliary program (e.g., the present auxiliary program) executed by a PLC that is configured to control a first operation of a controlled device included in a manufacturing apparatus, is connected to an information processing apparatus via a communication network line, and is configured to operate in conjunction with the information processing apparatus, in which the PLC includes a PLC control unit configured to control the first operation, and a PLC storage configured to store a plurality of first device values to be used for controlling the first operation, and a plurality of second device values to be used for controlling a second operation of the information processing apparatus, in which the plurality of first device values includes one or more first instruction values for causing the first operation to be executed, and the plurality of second device values includes one or more second instruction values for causing the second operation to be executed, the auxiliary program causing the PLC control unit to execute: second instruction value change processing (e.g., the second instruction value change step: S303) of changing the second instruction value corresponding to the second operation in order to cause the information processing apparatus to execute the second operation; and first instruction value change processing (e.g., the first instruction value change step: S301 and S304) of changing, based on an instruction from the information processing apparatus that has executed the second operation, the first instruction value corresponding to the instruction. According to this configuration, the degree of freedom in selecting functions that are implementable in the manufacturing apparatus, in which the operation is controlled by the PLC, is enhanced.

### [Reference signs List]

- 1: Interoperation system
- 2: Manufacturing apparatus
- 3: PLC
- 32: PLC storage
- 33: PLC control unit
- 4: Controlled device
- 5: Touch panel terminal
- 531: TP acquisition unit
- 532: TP change instruction unit
- 54: TP display operation unit (TP display unit)
- 6: Information processing apparatus
- 62: PC storage (Storage)
- 631: PC acquisition unit (Device value acquisition unit)
- 632: PC determination unit (Determination unit)
- 633: PC operation control unit (Operation control unit)
- 634: PC operation instruction unit (Operation instruction unit)
- C1: First correspondence information
- C2: Second correspondence information
- P1: Execution operation region (Operation region)

## Claims

1. An interoperation system comprising:
a controlled device included in a manufacturing apparatus;
a PLC configured to control a first operation of the controlled device; and
an information processing apparatus that is connected to the PLC via a communication network line and is configured to operate in conjunction with the PLC,
wherein
the PLC includes
a PLC control unit configured to control the first operation, and
a PLC storage configured to store a plurality of first device values to be used for controlling the first operation, and a plurality of second device values to be used for controlling a second operation of the information processing apparatus, wherein
the plurality of first device values includes one or more first instruction values for causing the first operation to be executed, and
the plurality of second device values includes one or more second instruction values for causing the second operation to be executed, and
the information processing apparatus includes
a device value acquisition unit configured to acquire one or more of the second device values stored in the PLC storage at a predetermined time interval,
a determination unit configured to determine, after the acquisition of the one or more second device values, whether any of the second instruction values included in the acquired second device values have been changed, and
an operation control unit configured to control, when any of the second instruction values have been changed, the second operation corresponding to the changed second instruction value among the second operations.

2. The interoperation system according to claim 1, wherein
the information processing apparatus includes an operation instruction unit configured to instruct the PLC to execute the first operation of the controlled device, based on a result of the second operation, and
the PLC control unit changes the first instruction value corresponding to the first operation and stored in the PLC storage, based on an instruction from the operation instruction unit.

3. The interoperation system according to claim 2, wherein
the information processing apparatus is capable of executing a plurality of different second operations,
the plurality of second device values includes the plurality of second instruction values,
each of the plurality of second instruction values corresponds to each of the plurality of second operations, and
the PLC control unit changes one of the second instruction values among the plurality of second instruction values stored in the PLC storage, based on a result of the first operation corresponding to the instruction.

4. The interoperation system according to claim 2, wherein
the controlled device is capable of executing a plurality of different first operations,
the plurality of first device values includes the plurality of first instruction values,
each of the first instruction values corresponds to each of the first operations,
the information processing apparatus includes a storage configured to store first correspondence information indicating a correspondence between each of the first operations and each content of the instructions, and
the operation instruction unit instructs the PLC to execute the first operation of the controlled device, based on the result of the second operation and the first correspondence information.

5. The interoperation system according to claim 1, wherein
the information processing apparatus is capable of executing a plurality of different second operations,
the plurality of second device values includes the plurality of second instruction values,
each of the second instruction values corresponds to each of the second operations,
the information processing apparatus includes a storage configured to store
operation programs respectively corresponding to each of the second operations, and
second correspondence information indicating a correspondence between each of the second instruction values and each of the operation programs, and
the operation control unit
selects the operation program corresponding to the second instruction value from among the plurality of operation programs, based on the changed second instruction value and the second correspondence information, and
controls the second operation by executing the selected operation program.

6. The interoperation system according to claim 1, further comprising
an external device connected to the information processing apparatus, wherein
the operation control unit controls an operation of the external device as the second operation.

7. The interoperation system according to claim 1, further comprising
an external device connected to the information processing apparatus, wherein
the operation control unit executes the second operation by using external information acquired from the external devices.

8. The interoperation system according to claim 6 or 7, wherein the plurality of second device values includes one or more parameter values used for an operation of the external device.

9. The interoperation system according to claim 1, further comprising
a touch panel terminal that is connected to the PLC and is configured to accept a user operation, wherein
the touch panel terminal includes
a TP acquisition unit configured to acquire one or more of the second device values stored in the PLC storage,
a TP display unit configured to display one or more of the acquired second device values, and
a TP change instruction unit configured to instruct a change of one or more of the second device values stored in the PLC storage, based on the user operation on one or more of the second device values displayed on the TP display unit, and
the PLC control unit changes, based on an instruction from the TP change instruction unit, the second device value corresponding to the instruction and stored in the PLC storage.

10. The interoperation system according to claim 9, wherein
the TP display unit displays an operation region to be operated by the user in order to change the second instruction value,
the TP change instruction unit instructs a change of the second instruction value stored in the PLC storage, based on the user operation on the operation region displayed on the TP display unit, and
the PLC control unit changes, based on the instruction from the TP change instruction unit, the second instruction value corresponding to the instruction and stored in the PLC storage.

11. The interoperation system according to claim 1, wherein the information processing apparatus is configured with a computer including a processor configured to function as the device value acquisition unit, the determination unit, and the operation control unit.

12. An interoperation method executed by an interoperation system including
a controlled device included in a manufacturing apparatus,
a PLC configured to control a first operation of the controlled device, and
an information processing apparatus that is connected to the PLC via a communication network line and is configured to operate in conjunction with the PLC,
wherein
the PLC includes
a PLC control unit configured to control the first operation, and
a PLC storage configured to store a plurality of first device values to be used for controlling the first operation, and a plurality of second device values to be used for controlling a second operation of the information processing apparatus, wherein
the plurality of first device values includes one or more first instruction values for causing the first operation to be executed, and
the plurality of second device values includes one or more second instruction values for causing the second operation to be executed,
the interoperation method comprising:
a device value acquisition step of acquiring one or more of the second device values including the second instruction values stored in the PLC storage at a predetermined time interval;
an instruction value determination step of determining, after the acquisition of the one or more second device values, whether any of the second instruction values included in the acquired second device values have been changed; and
an operation control step of controlling, when any of the second instruction values have been changed, the second operation corresponding to the changed second instruction value among the second operations.

13. An interoperation program executed by an information processing apparatus that is connected to, via a communication network line, a PLC configured to control a first operation of a controlled device included in a manufacturing apparatus and is configured to operate in conjunction with the PLC, wherein
the PLC includes a PLC storage configured to store a plurality of first device values to be used for controlling the first operation, and a plurality of second device values to be used for controlling a second operation of the information processing apparatus, wherein the plurality of second device values includes one or more second instruction values for causing the second operation to be executed, and
the information processing apparatus includes a processor,
the interoperation program causing the processor to execute:
device value acquisition processing of acquiring one or more of the second device values stored in the PLC storage at a predetermined time interval;
instruction value determination processing of determining, after the acquisition of the one or more second device values, whether any of the second instruction values included in the acquired second device values have been changed; and
operation control processing of controlling, when any of the second instruction values have been changed, the second operation corresponding to the changed second instruction value among the second operations.

14. An interoperation auxiliary program executed by a PLC that is configured to control a first operation of a controlled device included in a manufacturing apparatus, is connected to an information processing apparatus via a communication network line, and is configured to operate in conjunction with the information processing apparatus, wherein
the PLC includes
a PLC control unit configured to control the first operation, and
a PLC storage configured to store a plurality of first device values to be used for controlling the first operation, and a plurality of second device values to be used for controlling a second operation of the information processing apparatus, wherein
the plurality of first device values includes one or more first instruction values for causing the first operation to be executed, and
the plurality of second device values includes one or more second instruction values for causing the second operation to be executed,
the interoperation auxiliary program causing the PLC control unit to execute:
second instruction value change processing of changing the second instruction value corresponding to the second operation in order to cause the information processing apparatus to execute the second operation; and
first instruction value change processing of changing, based on an instruction from the information processing apparatus that has executed the second operation, the first instruction value corresponding to the instruction.
